# EUROPÄISCHE PATENTANMELDUNG

(11) **EP 0 590 328 A1**
(43) Veröffentlichungstag der Anmeldung: **06.04.1994**
(21) Anmeldenummer: 93113867.1
(22) Anmeldetag: 31.08.1993
(51) Int. Cl.: F24F 6/14

(54) **Vorrichtung zur Befeuchtung eines Luftstroms**

(30) Priorität: 02.09.1992 DE 4229172
(71) Anmelder: LTG LUFTTECHNISCHE GMBH, D-70435 Stuttgart (DE)
(72) Erfinder: Schaal, Gerd-Eugen, Dr.-Ing., D-70567 Stuttgart (DE)
(74) Vertreter: Grosse, Rainer, Dipl.-Ing.

(57) **Zusammenfassung**

Die Erfindung betrifft eine Vorrichtung zur Befeuchtung eines Luftstromes einer lufttechnischen Einrichtung, insbesondere einer prozeßlufttechnischen oder raumlufttechnischen Anlage, mit einer Sprühdüsenanordnung für eine Flüssigkeitszerstäubung (insbesondere Wasserzerstäubung), die mehrere, in bezug auf die Luftströmungsrichtung nebeneinander angeordnete, im Luftstrom liegende Sprühdüsen aufweist. Es ist vorgesehen, daß dem Zwickelbereich (11) von jeweils einander benachbarten Umhüllenden (7) der aus den Sprühdüsen (4) austretenden Flüssigkeits-Sprühkegeln (6) mindestens ein Luftstrom-Sperrelement (10) zugeordnet ist.

## Beschreibung

Die Erfindung betrifft eine Vorrichtung zur Befeuchtung eines Luftstromes einer lufttechnischen Einrichtung, insbesondere einer prozeßlufttechnischen oder raumlufttechnischen Anlage (RLT-Anlage), mit einer Sprühdüsenanordnung für eine Flüssigkeitszerstäubung (insbesondere eine Wasser-Zerstäubung), die mehrere, in bezug auf die Luftstromrichtung nebeneinander angeordnete, im Luftstrom liegende Sprühdüsen aufweist.

In lufttechnischen Einrichtungen, insbesondere einer prozeßlufttechnischen oder raumlufttechnischen Anlage, wird im allgemeinen ein Raumklima verlangt, bei dem neben der Erhaltung einer vorgegebenen Temperatur auch die Feuchte (relative Luftfeuchte) in bestimmten Grenzen liegt. Dies bedeutet für die RLT-Anlage in Abhängigkeit von den Raumfeuchtequellen und dem Außenluftzustand eine entsprechende Luftfeuchtebeeinflussung vornehmen zu müssen.

Für die Luftbefeuchtung sind im lufttechnischen Anlagen folgende Systeme bekannt:
- Dampfeinspeisung in den Luftstrom (Dampflanzen),
- Anordnung großer benetzter Oberflächen in den Luftweg (Rieselbefeuchter),
- Versprühen von Wasser in den Luftstrom (Sprühbefeuchter),
- Versprühen durch Zentrifugalbefeuchter (Schleuderbefeuchter),
- Befeuchtung durch Ultraschallwellen (Schwingungsbefeuchter).

Die Erfindung befaßt sich mit einer in der vorstehenden Aufzählung genannten Luftbefeuchtungseinrichtung, nämlich mit einem Sprühdüsen-Befeuchter (Düsenkammer), der das am weitesten verbreitete Element zur Luftbefeuchtung in RLT-Anlagen darstellt. Derartige Anordnungen werden auch als "Luftwascher" bezeichnet. Ziel des Flüssigkeits-Zerstäubungsvorganges, insbesondere Wasser-Zerstäubungsvorganges, in einer Düsenkammer ist einerseits die Erzeugung einer möglichst großen Wasseroberfläche, welche als Ausgangsfläche für den herbeizuführenden Verdunstungsprozess dient und andererseits eine möglichst große Relativgeschwindigkeit zwischen den Wassertropfen und der Luft zu schaffen, um den Wärme- und Stoffaustausch zu intensivieren.

Es ist bekannt, in einer Düsenkammer eine Vielzahl von Sprühdüsen anzuordnen, die die Befeuchtungsflüssigkeit (insbesondere Wasser) in Form von Flüssigkeits-Sprühkegeln verdüsen, wobei die Sprührichtung entweder in Richtung des Luftstromes oder entgegen der Luftstromrichtung erfolgt. Bei den bekannten Vorrichtungen wird ca. 30% des versprühten Wassers von der Luft aufgenommen; 70% des eingesetzten Wassers müssen somit zwar versprüht werden, führen jedoch nicht zu einer Feuchteerhöhung der Luft. Der Wirkungsgrad dieser bekannten Einrichtungen ist somit relativ niedrig; der Betrieb der Anlagen erfordert hohe Energiekosten.

Der Erfindung liegt die Aufgabe zugrunde, eine Vorrichtung zur Befeuchtung eines Luftstromes einer lufttechnischen Einrichtung zu schaffen, die einen verbesserten Wirkungsgrad besitzt und eine bessere Durchmischung sowie Gleichrichtung des Luftstromes gewährleistet.

Diese Aufgabe wird erfindungsgemäß dadurch gelöst, daß dem Zwickelbereich von jeweils einander benachbarten Umhüllenden der aus den Sprühdüsen austretenden Flüssigkeits-Sprühkegeln mindestens ein Luftstrom-Sperrelement zugeordnet ist. Unter "Zwickelbereich" ist der jeweils zwischen benachbarten Sprühdüsen liegende Bereich zu verstehen, der zwischen den jeweiligen Flüssigkeits-Sprühkegeln beziehungsweise in einer gedachten Verlängerungslinie dazu (die vorzugsweise in Sprührichtung verläuft) liegt. Durch die Abdeckung dieses Bereichs beziehungsweise dieser Bereiche (bei mehr als zwei Sprühdüsen) wird die Verteilung des Wassernebels in der Luft verbessert und im Hinblick auf einen Stoffaustausch intensiviert. Bei den bekannten Befeuchtungsvorrichtungen, bei denen nicht die erfindungsgemäßen Luftstrom-Sperrelemente zum Einsatz kommen, gelangt die Luft erst nach dem Durchlaufen einer recht langen, von den Sprühdüsen ausgehenden Distanz mit dem Wassernebel in Berührung und wird dort nicht intensiv genug befeuchtet. Durch die erfindungsgemäßen Luftstrom-Sperrelemente, die sich in den Zwickelbereichen der Flüssigkeits-Sprühkegeln benachbarter Sprühdüsen befinden, wird der jeweilige Anteil des Luftstroms intensiv dem jeweils zugehörigen Flüssigkeits-Sprühkegel zugeleitet, so daß schon in einem kurzen Abstand zur Düse eine intensive Befeuchtung stattfinden kann. Die Folge ist, daß ein wesentlich größerer Anteil des versprühten Wassers von dem Luftstrom aufgenommen wird, so daß ein optimaler Wirkungsgrad besteht. Sofern die Sprühdüsenanordnung mehr als zwei Sprühdüsen aufweist und insofern eine Vielzahl von Zwickelbereichen ausgebildet wird, ist eine entsprechende Anzahl von Luftstrom-Sperrelementen im Luftstrom angeordnet. Für die Befeuchtung wird vorzugsweise Wasser, insbesondere aufbereitetes Wasser, eingesetzt.

Nach einer Weiterbildung der Erfindung ist vorgesehen, daß der Zwickelbereich derart vom Luftstrom-Sperrelement abgedeckt ist, daß die zugehörigen Anteile des Luftstroms den entsprechenden Sprühkegeln zugeleitet wird. Durch das Luftstrom-Sperrelement beziehungsweise die Luftstrom-Sperrelemente werden die entsprechenden Luftstrom-Anteile somit besonders intensiv in Kontakt mit den Flüssigkeits-Sprühkegeln gebracht.

Vorteilhaft ist es, wenn das Luftstrom-Sperrelement -in Strömungsrichtung des Luftstroms gesehen- vor, auf gleicher Höhe von oder hinter den Sprühdüsen angeordnet ist. Mithin besteht die Möglichkeit, die einzelnen Luftstrom-Sperrelemente nicht nur auf Höhe der Sprühdüsen anzuordnen, sondern diese auch stromauf oder stromab der Sprühdüsen anzuordnen. Vorzugsweise sind die Luftstrom-Sperrelemente maximal 0,4 m stromauf beziehungsweise stromab zu den Sprühdüsen angeordnet. Vorzugsweise beträgt dieser Abstand im Bereich ± 0,3 m.

Aus dem Vorstehenden wird deutlich, daß, je nach Anzahl der eingesetzten Sprühdüsen, entweder nur ein Luftstrom-Sperrelement vorhanden ist oder daß eine Vielzahl von Luftstrom-Sperrelementen in den entsprechenden Zwickelbereichen eingesetzt wird. Die Erfindung bezieht sich sowohl auf ein Luftstrom-Sperrelement als auch auf eine Vielzahl davon, auch wenn im jeweiligen Text gegebenenfalls nur von einem Luftstrom-Sperrelement oder von mehreren Luftstrom-Sperrelementen die Rede ist. Die Luftstrom-Sperrelemente haben das Umlenken des entsprechenden Luftstromanteils zur Folge, so daß sie auch als Luftleitelemente bezeichnet werden könnten.

Die Luftstrom-Sperrelemente begrenzen Luftstrom-Durchtrittsbereiche, in denen sich die Sprühdüsen befinden. Dies bedeutet nicht, daß die Luftstrom-Durchtrittsbereiche auf gleicher Höhe der Sprühdüsen liegen müssen, sondern sie können -wie vorstehend schon erwähnt- auch stromauf beziehungsweise stromab der Sprühdüsen angeordnet sein, wobei sie sich jedoch stets -in Richtung des Luftstromes gesehen- seitlich versetzt zu den entsprechenden Sprühdüsen befinden.

Die Luftstrom-Durchtrittsbereiche können vorzugsweise kreisförmige oder etwa kreisförmige Querschnitte aufweisen. Insbesondere ist es vorteilhaft, wenn die Sprühdüsen zentral innerhalb der Luftstrom-Durchtrittsbereiche angeordnet sind. Dies bedeutet, daß im Falle von im Querschnitt kreisförmigen Luftstrom-Durchtrittsbereichen im jeweiligen Kreismittelpunkt die zugehörige Sprühdüse angeordnet ist, wobei sie sich auf gleicher Höhe oder stromab beziehungsweise stromauf versetzt zum zugehörigen Luftstrom-Sperrelement befinden kann.

Nach einem bevorzugten Ausführungsbeispiel werden die Luftstrom-Sperrelemente mittels eines Lochblechs gebildet, dessen Löcher die Luftstrom-Durchtrittsbereiche bilden und dessen zwischen den Löchern liegendes Material die Zwickelbereiche der jeweils einander benachbarten Umhüllenden der aus den Sprühdüsen austretenden Flüssigkeits-Sprühkegeln abdecken.

Vorzugsweise sind die Sprühdüsen als Hochdruck-Sprühdüsen ausgebildet, das heißt, die Flüssigkeit wird mit Hochdruck versprüht. Der Sprühdruck liegt im Bereich von 10 bis maximal 600 bar. Die Versprühung mittels Hochdruck hat den Vorteil besonders feiner Flüssigkeitsverteilung mit extrem kleinen Tröpfchengrößen, wodurch eine sehr große Benetzungsoberfläche zur Verfügung steht. Bei dem Betrieb der Vorrichtung ist stets darauf zu achten, daß den sich an die Düsenkammer anschließenden Elementen, zum Beispiel Luftleitkanälen, nur Luft mit einer bestimmten Grenzfeuchtigkeit zugeführt wird, um einen Niederschlag in Form von Wassertropfen an den Kanalwänden zu vermeiden. Die nachfolgenden Einrichtungen müssen also trocken bleiben. Aus diesem Grunde kann zusätzlich zu der Steuerung beziehungsweise Regelung der Wasserzuführung und/oder Verstellen von Sperrelementen ein Wasserabscheider vorgesehen sein, der sich stromab der Sprühdüsenanordnung befindet und lediglich größere Wassertröpfchen abscheidet. Feiner Sprühnebel, der insbesondere durch die Hochdruckversprühung erzeugt wird, kann diesen Wasserabscheider ungehindert passieren.

Die Zeichnungen veranschaulichen die Erfindung anhand mehrerer Ausführungsbeispiele und zwar zeigt:
- Figur 1: eine Vorrichtung zur Befeuchtung eines Luftstormes einer lufttechnischen Einrichtung in schematischer Darstellung,
- Figur 2: ein Luftstrom-Sperrelement der Einrichtung gemäß Figur 1, das als Lochblech ausgebildet ist,
- Figur 3: eine Seitenansicht des Lochblechs gemäß Figur 2,
- Figur 4: ein weiteres Ausführungsbeispiel einer Befeuchtungsvorrichtung und
- Figur 5: ein letztes Ausführungsbeispiel einer Befeuchtungsvorrichtung.

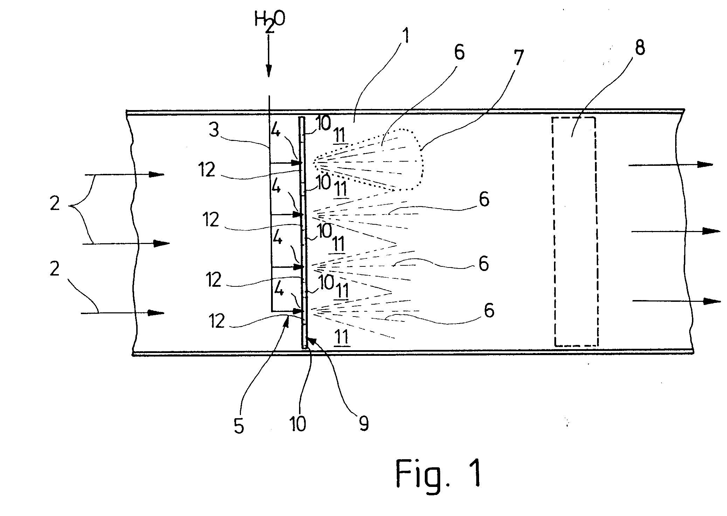

Die Figur 1 zeigt -in schematischer Darstellungeinen Längsschnitt durch eine Düsenkammer 1, die eine Vorrichtung zur Befeuchtung eines Luftstroms einer lufttechnischen Einrichtung darstellt. Nähere Einzelheiten der sich anschließenden lufttechnischen Einrichtung, zum Beispiel einer Lüftungs- oder Klima-Anlage sind nicht dargestellt; vielmehr zeigt die Figur 1 lediglich einen Abschnitt der Gesamtanordnung. Der Düsenkammer 1 wird ein Luftstrom 2 mittels einer nicht dargestellten Lufttransportvorrichtung (zum Beispiel einem Ventilator) zugeführt. In der Düsenkammer 1 ist ein Hochdruck-Rohrleitungssystem 3 angeordnet, an das flächenmatrixförmig angeordnete Sprühdüsen 4 einer Sprühdüsenanordnung 5 angeschlossen sind. Die Speisung der Sprühdüsen 4 erfolgt mittels einer nicht dargestellten Hochdruckpumpe, deren Förderdruck und Fördermenge regelbar beziehungsweise steuerbar ist. Im Betrieb bildet jede Sprühdüse 4 einen Flüssigkeits-Sprühkegel 6 aus, dessen jeweilige räumliche Ausdehnung mittels einer Umhüllenden 7 definiert ist (in der Figur 1 ist die Umhüllende 7 der zuoberst angeordneten Sprühdüse 4 mittels einer gepunkteten Linie gekennzeichnet).

Stromab der Sprühdüsenanordnung 5 kann -nach einem bevorzugten Ausführungsbeispiel der Erfindung- ein Wasserabscheider 8 in der Düsenkammer 1 angeordnet sein. Dieser hat die Aufgabe, besonders große Wassertröpfchen abzuscheiden; kleinere Wassertröpfchen können den Wasserabscheider 8 passieren, so daß der mittels der Düsenanordnung 5 befeuchtete Luftstrom 2 weiteren Einrichtungen der lufttechnischen Gesamtanordnung zugeleitet wird.

Der Sprühdüsenanordnung 5 ist eine Luftstrom-Leiteinrichtung 9 zugeordnet, die eine Vielzahl von Luftstrom-Sperrelementen 10 aufweist, welche in den jeweiligen Zwickelbereichen 11 von einander benachbarten Umhüllenden 7 der aus den Spruhdüsen 4 austretenden Flüssigkeits-Sprühkegeln 6 angeordnet sind. Die Zwickelbereiche 11 werden also mittels der Luftstrom-Sperrelemente 10 abgedeckt, so daß der zugeführte Luftstrom 2 entsprechend aufgeteilt wird und in den Zwickelbereichen 11 keine (oder zumindest eine sehr stark abgeschwächte) Luftströmung vorliegt. An die Luftstrom-Sperrelemente 11 schließen sich seitlich Luftstrom-Durchtrittsbereiche 12 an, wobei vorzugsweise jedem Luftstrom-Durchtrittsbereich 12 eine Sprühdüse 4 zugeordnet ist. Der zugeführte Luftstrom 2 teilt sich somit auf die Luftstrom-Durchtrittsbereiche 12 auf und wird unmittelbar und intensiv dem jeweils zugeordneten Flüssigkeits-Sprühkegel 6 zugeleitet. Hierdurch kann ein intensiver Temperatur- und Stoffaustausch zwischen der Flüssigkeit (insbesondere Wasser) und der Luft erfolgen.

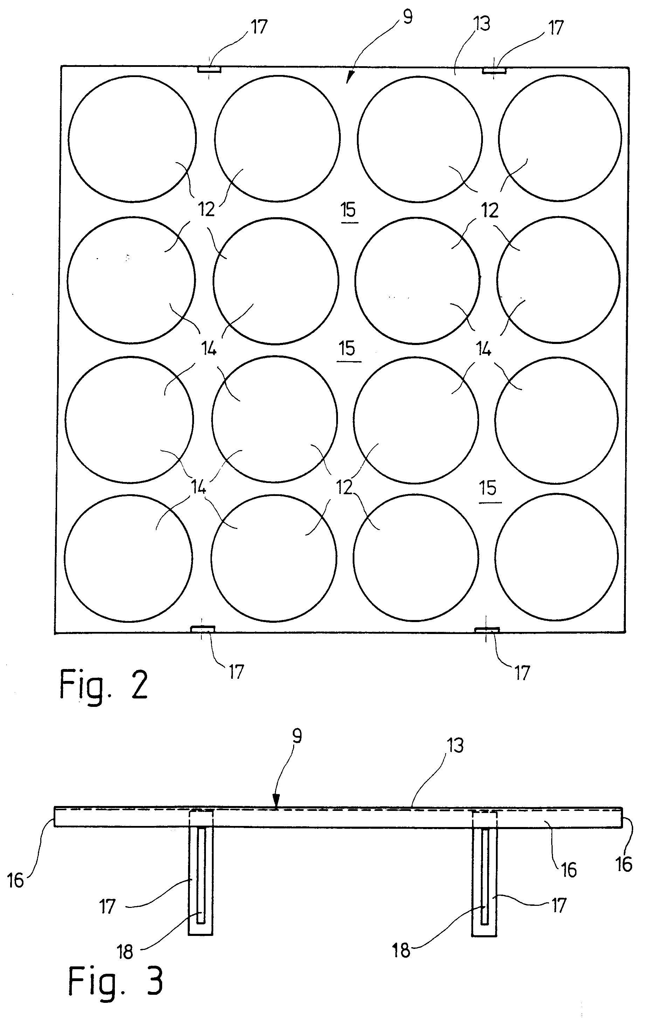

Gemäß Figur 2 ist die Luftstrom-Leiteinrichtung 9 als Lochblech 13 ausgebildet. Dieses weist flächenmatrixförmig angeordnete Luftstrom-Durchtrittsbereiche 12 auf, die als Löcher 14 mit kreisförmigem Querschnitt ausgebildet sind. Dem Zentrum jedes Lochs 14 ist eine Sprühdüse 4 zugeordnet. Das zwischen den einzelnen Löchern 14 liegende Material 15 deckt die Zwickelbereiche 11 der jeweils einander benachbarten Umhüllenden 7 der aus den Sprühdüsen 4 austretenden Flüssigkeits-Sprühkegel 6 ab. Dieses Material 15 bildet somit die Luftstrom-Sperrelemente 10.

Gemäß Figur 3 kann vorgesehen sein, daß das Lochblech 13 nur eine relativ geringe Dicke aufweist, wobei -insbesondere zur mechanischen Versteifungdie Ränder 16 abgewinkelt sind. Mittels Befestigungslaschen 17, die an den abgewinkelten Rändern 16 des Lochblechs 13 befestigt sind, kann das Lochblech 13 in der Düsenkammer 1 in geeigneter Position befestigt werden. Vorzugweise besitzen die Laschen 17 Langlöcher 18, um die Position relativ zu den Sprühdüsen 4 in stromab- beziehungsweise stromaufwärtiger Richtung einstellen zu können. Alternativ ist auch eine Verstellung im Betrieb möglich.

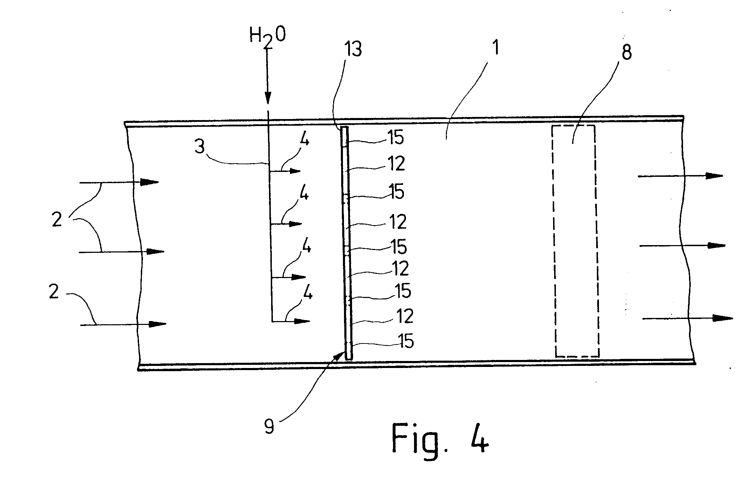

Die Figur 4 zeigt ein Ausführungsbeispiel der Erfindung, das dem Ausführungsbeispiel der Figur 1 entspricht, wobei die Luftstrom-Leiteinrichtung 9 jedoch stromab zu den Sprühdüsen 4 angeordnet ist.

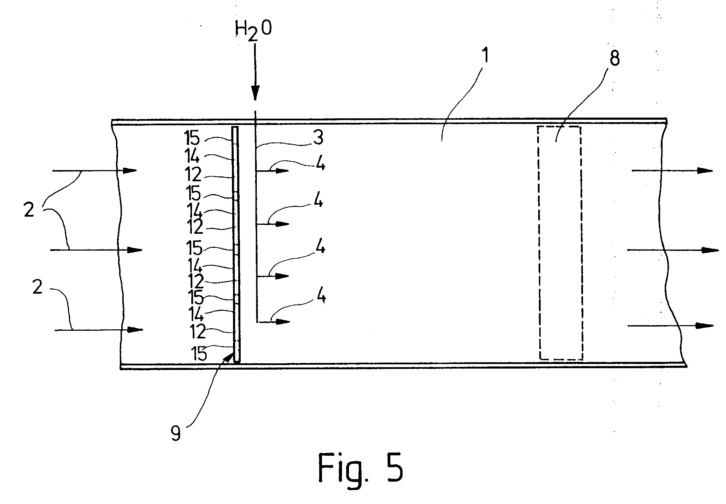

Die Figur 5 zeigt ein weiteres Ausführungsbeispiel, das ebenfalls dem Aufbau des Ausführungsbeispiels der Figur 1 entspricht, wobei jedoch die Luftstrom-Leiteinrichtung 9 stromauf zu den Sprühdüsen 4 angeordnet ist. Der Abstand zu den Sprühdüsen 4 kann -gemäß der Ausführungsbeispiele der Figuren 4 und 5- maximal ± 0,4 m, vorzugsweise im Bereich von ± 0,3 m betragen. Im Gegensatz zu den Ausführungsbeispielen der Figur 4 und 5 ist bei dem Ausführungsbeispiel der Figur 1 die Luftstrom-Leiteinrichtung 9 in Höhe der Sprühdüsen 4 angeordnet.

## Patentansprüche

1. Vorrichtung zur Befeuchtung eines Luftstromes einer lufttechnischen Einrichtung, insbesondere einer prozeßlufttechnischen oder raumlufttechnischen Anlage, mit einer Sprühdüsenanordnung für eine Flüssigkeitszerstäubung (insbesondere Wasserzerstäubung), die mehrere, in bezug auf die Luftströmungsrichtung nebeneinander angeordnete, im Luftstrom liegende Sprühdüsen aufweist, **dadurch gekennzeichnet**, daß dem Zwickelbereich (11) von jeweils einander benachbarten Umhüllenden (7) der aus den Sprühdüsen (4) austretenden Flüssigkeits-Sprühkegeln (6) mindestens ein Luftstrom-Sperrelement (10) zugeordnet ist.

2. Vorrichtung nach Anspruch 1, **dadurch gekennzeichnet**, daß der Zwickelbereich (11) derart vom Luftstrom-Sperrelement (10) abgedeckt ist, daß die zugehörigen Anteile des Luftstroms (2) den entsprechenden Flüssigkeits-Sprühkegeln (6) zugeleitet wird.

3. Vorrichtung nach einem der vorhergehenden Ansprüche, **dadurch gekennzeichnet**, daß das Luftstrom-Sperrelement (10) -in Strömungsrichtung des Luftstromes (2) gesehen- vor, auf gleicher Höhe von oder hinter den Sprühdüsen (4) angeordnet ist.

4. Vorrichtung nach einem der vorhergehenden Ansprüche, **dadurch gekennzeichnet**, daß die Luftstrom-Sperrelemente (10) Luftstrom-Durchtrittsbereiche (12) begrenzen, in den sich die Sprühdüsen (4) befinden.

5. Vorrichtung nach einem der vorhergehenden Ansprüche, **dadurch gekennzeichnet**, daß die Luftstrom-Durchtrittsbereiche (12) kreisförmige oder etwa kreisförmige Querschnitte aufweisen.

6. Vorrichtung nach einem der vorhergehenden Ansprüche, **dadurch gekennzeichnet**, daß die Sprühdüsen (4) zentral innerhalb der Luftstrom-Durchtrittsbereiche (12) angeordnet sind.

7. Vorrichtung nach einem der vorhergehenden Ansprüche, **gekennzeichnet durch** ein Lochblech (13), dessen Locher (14) die Luftstrom-Durchtrittsbereiche (12) und dessen zwischen den Löchern (14) liegendes Material (15) die die Zwickelbereiche (11) abdeckenden Luftstrom-Sperrelemente (10) bilden.

8. Vorrichtung nach einem der vorhergehenden Ansprüche, **dadurch gekennzeichnet**, daß die Sprühdüsen (4) als Hochdruck-Sprühdüsen ausgebildet sind.

9. Vorrichtung nach einem der vorhergehenden Ansprüche, **gekennzeichnet durch** einen Flüssigkeitsabscheider (Wasserabscheider 8), der stromab zu den Hochdruckdüsen (Sprühdüsen 4) angeordnet ist.
